Europäisches Patentamt

European Patent Office

Office européen des brevets

(11) Veröffentlichungsnummer : **0 384 009 B1**

(19)

(12) **EUROPÄISCHE PATENTSCHRIFT**

(45) Veröffentlichungstag der Patentschrift :
11.01.95 Patentblatt 95/02

(51) Int. Cl.⁶ : **H04N 5/33**

(21) Anmeldenummer : **89120870.4**

(22) Anmeldetag : **10.11.89**

(54) **Vorrichtung zur Gewinnung kontrastreicher Bilder.**

(30) Priorität : **23.02.89 DE 3905591**

(43) Veröffentlichungstag der Anmeldung :
**29.08.90 Patentblatt 90/35**

(45) Bekanntmachung des Hinweises auf die
Patenterteilung :
**11.01.95 Patentblatt 95/02**

(84) Benannte Vertragsstaaten :
**DE FR GB IT**

(56) Entgegenhaltungen :
**DE-B- 1 289 092**
**US-A- 4 751 571**
**IBM TECHNICAL DISCLOSURE BULLETIN,**
**Band 13, Nr. 3, August 1970, Seiten 612-613,**
**New York, US; VW.T. TOWNSEND: "Image**
**contrast enhancement"**

(73) Patentinhaber : **Rheinmetall Industrie GmbH**
**Pempelfurtstrasse 1**
**D-40880 Ratingen (DE)**
Patentinhaber : **TZN Forschungs- und**
**Entwicklungszentrum Unterlüss GmbH**
**Neuensothriether Strasse 20**
**D-29345 Unterlüss (DE)**

(72) Erfinder : **Osthues, Josef, Dr.**
**Düsseldorfer Strasse 206c**
**D-4020 Mettmann (DE)**
Erfinder : **Neff, Helmut Franz, Dr.**
**Backebergsmühle 11**
**D-3102 Hermannsburg (DE)**
Erfinder : **Meyer, Walter**
**Kiefernstrasse 5**
**D-3104 Unterlüss (DE)**
Erfinder : **Klameth, Klaus**
**Ehlershof 8**
**D-3000 Hannover (DE)**
Erfinder : **Nitsche, Brigitte**
**Papenbusch 3**
**D-4780 Lippstadt (DE)**
Erfinder : **Haberäcker, Peter, Prof. Dr.**
**Sonnenleite 17**
**D-8034 Germering (DE)**

EP 0 384 009 B1

## Beschreibung

Die Erfindung betrifft eine Vorrichtung, wie sie im Gattungsbegriff des Anspruchs 1 definiert ist.

Zur Erkennung militärischer Objekte wird häufig der Einsatz von Radar, Infrarotkameras sowie von konventionellen Fernseh- und Filmkameras benutzt (vgl. z.B. DE 36 31 944 C2 und DE 34 18 394 C2).

Die Verwendung von Radar zur Zielerkennung setzt einen verhältnismäßig hohen technischen Aufwand und dominierend metallische Eigenschaften des Zieles voraus. Der Einsatz von IR-Bildgeräten erfordert eine klare IR-Signatur, d.h. ein warmes Ziel. Die Zielerkennung von Kaltzielen (Unterstände, ruhende Fahrzeuge etc.) bereitet hingegen Schwierigkeiten.

Bei Verwendung von Fernseh- und Filmkameras hat sich gezeigt, daß häufig eine eindeutige Identifizierung von militärischen Objekten, die mit Tarnfarbe bzw. Tarnnetzen versehen sind und die von natürlicher Vegetation (Clutter) umgeben sind, Schwierigkeiten bereitet.

Aus der DE-B-1 289 092 ist bereits eine Vorrichtung zur Verbesserung der Erkennbarkeit von schwach beleuchteten und/oder schwach leuchtenden Objekten bekannt. Dabei wird zur Verbesserung des Kontrastes des Zielobjektes gegenüber dem Hintergrund vorgeschlagen, das vom Objekt kommende Licht nicht mit einem breitbandigen Sensor, sondern gleichzeitig oder nacheinander mit mehreren das entsprechende Spektrum überdeckenden schmalbandigen Sensoren zu analysieren. Hierbei werden die jeweiligen Bilder der Sensoren an jeweilige Farbeingänge eines Farbmonitors zur Darstellung eines Bildes angeschlossen, oder es wird durch Differenzbildung von jeweils zwei Sensorausgängen eine Verstärkung der Bildqualität erzeugt.

Aus der Zeitschrift: IBM Technical Disclosure Bulletin Band 13, Nr. 3, August 1970, Seiten 612-613, Townsend: "Image Contrast Enhancement", ist ferner eine Vorrichtung bekannt, bei der zur Kontrastverbesserung des Bildes gegenüber dem Hintergrund das reflektierte Licht bei zwei unterschiedlichen Wellenlängen $\lambda 1$ und $\lambda 2$ empfangen wird. Je nach dem, ob der Quotient der bei den beiden Wellenlängen gemessenen Intensitätswerten größer oder kleiner als ein vorgegebener Schwellenwert ist, wird eine entsprechende der Kontrastverbesserung dienende Darstellungsart selektiert.

Der vorliegenden Erfindung liegt daher die Aufgabe zugrunde, eine Vorrichtung der eingangs erwähnten Art derart weiterzuentwickeln, daß eine Identifizierung von entsprechenden Gegenständen, insbesondere militärischen Objekten, auf einfache Weise möglich ist, und zwar auch dann, wenn die Objekte von natürlicher Vegetation umgeben und mit Tarnfarbe oder Tarnnetzen versehen sind.

Erfindungsgemäß wird diese Aufgabe durch die Merkmale des kennzeichnenden Teiles des Anspruchs 1 gelöst.

Besonders vorteilhafte Weiterbildungen der Erfindung sind in den abhängigen Ansprüchen offenbart.

Der Erfindung liegt also der Gedanke zugrunde, Bildaufnahmeelemente, insbesondere billige CCD-Kameras, zu verwenden, die jeweils in unterschiedlichen Wellenlängenbereichen ein Empfindlichkeitsmaximum aufweisen. Zur Zielerkennung wird dabei ausgenutzt, daß sich Ziele vom umgebenden natürlichen Clutter im Hinblick auf das Reflexionsverhalten im sichtbaren bzw. nahen Infrarotbereich unterscheiden. Die entstehenden spektralselektiven Bilder beider Kameras können daher mittels relativ einfacher Bildverarbeitung so verknüpft bzw. überlagert werden, daß ein maximaler Kontrast des Zieles erreicht wird. Aufgrund der einfachen Bildauswertung kann daher eine Zielerkennung in Echtzeit mit Standard-Digitalsignalprozessoren erreicht werden.

Im Vergleich zu den bisher häufig eingesetzten Radar- oder Infrarotzielerfassungssystemen weist die hier beschriebene Erfindung einen geringen technischen Aufwand auf. Insbesondere können auch getarnte Stellungen aufgrund der unterschiedlichen Reflexion der Tarnnetze erfaßt werden. Im Vergleich zur konventionellen Bildverarbeitung im sichtbaren Bereich ergibt die Anwendung spektralselektiver Filter eine optimale Unterdrückung des natürlichen Clutters. Daraus ergibt sich eine wesentlich erhöhte Detektionswahrscheinlichkeit.

Weitere Einzelheiten und Vorteile werden im folgenden anhand von Ausführungsbeispielen und mit Hilfe von Figuren erläutert.

Es zeigen:

Fig. 1     ein erstes Ausführungsbeispiel einer erfindungsgemäßen Vorrichtung und

Fig. 2     ein zweites erfindungsgemäßes Ausführungsbeispiel.

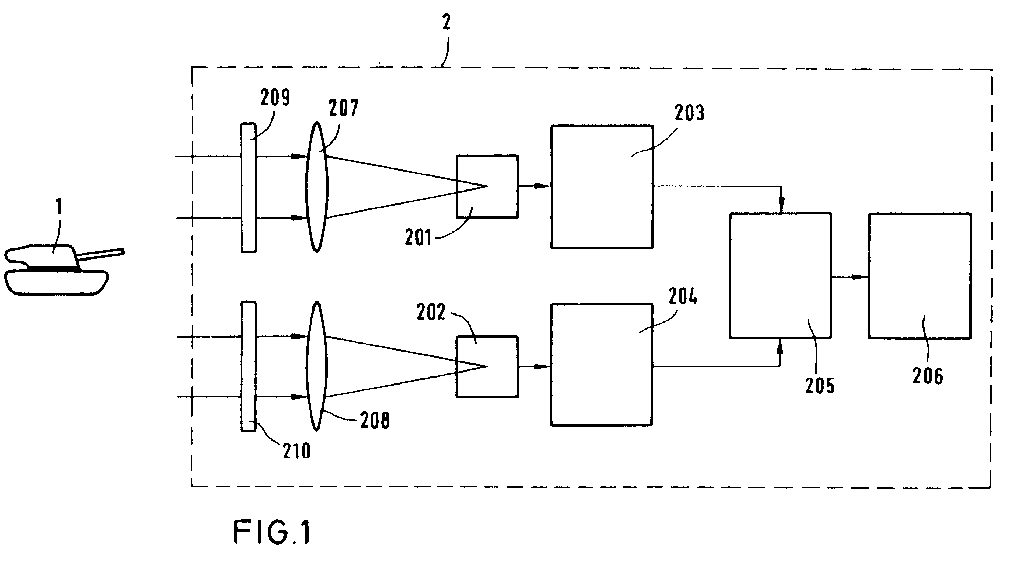

In Fig. 1 bedeutet 1 das zu erfassende Ziel und 2 die erfindungsgemäße Vorrichtung. Die Vorrichtung 2 weist zwei identische konventionelle CCD-Arrays oder Restlichtkameras 201, 202 auf. Beide Kameras weisen das gleiche Gesichtsfeld auf. Den Kameras 201, 202 nachgeschaltet sind Bildspeicher 203, 204, die mit einem Bildprozessor 205 verbunden sind. Dem Bildprozessor 205 ist ein Videodisplay 206 nachgeschaltet.

Zielseitig sind vor den Kameras 201, 202 Linsen 207, 208 und Interferenzfilter 209, 210 angeordnet.

Die Transmission der Interferenzfilter 209, 210 erfolgt bei unterschiedlichen Wellenlängen. In einem vorteilhaften Ausführungsbeispiel lag die Transmission des Filters 209 im sichtbaren Bereich (maximale Durchlässigkeit lag bei 400 nm), während die Transmission des Filters 210 im nahen Infrarotbereich (maximale Durchlässigkeit lag bei 800 nm).

Grundsätzlich sind bei Verwendung identischer CCD-Arrays die Filter 209 und 210 so so wählen, daß die einfallende Strahlung auf zwei Wellenlängenbereich $\lambda_1$, $\lambda_2$ begrenzt wird. Der Erste Bereich $\lambda_1$ wird dabei so gewählt, daß die Reflexionseigenschaften von Clutter und Ziel möglichst ähnlich sind. Der zweite Wellenlängenbereich $\lambda_2$ wird hingegen so gewählt, das sich möglichst große Unterschiede im Reflexionsverhalten von Ziel und Clutter zeigen. Vorzugsweise wird $\lambda_1$ so gewählt, daß sich dieser Bereich im nahen IR befindet (0,7 $\mu$m $\leqq \lambda_1 \leqq 2$ $\mu$m), während sich der Bereich $\lambda_2$ bei Wellenlängen 0,2 $\mu$m $\leqq \lambda_2 \leqq 0,6$ $\mu$m befindet.

Im folgenden wird kurz die Wirkungsweise der erfindungsgemäßen Vorrichtung 2 beschrieben:

Das von dem Ziel (z. B. Kampfpanzer, der von üppiger natürlicher Vegetation (Clutter) umgeben und mit bloßem Auge nicht sichtbar ist) ausgehende Streulicht gelangt über die Filter 209, 210 und die Linsen 207, 208 in die Kameras 201, 202. Die entsprechenden Ausgangssignale der Kameras werden in getrennten Bildspeichern 203 und 204 abgelegt. Sie werden danach in einem Bildprozessor 205 zu Bildsignalen $S_R$ zusammengeführt. Diese werden entweder auf dem Videodisplay 206 dargestellt oder zur weiteren Signalverarbeitung an ein zusätzliches Gerät in digitaler Form übergeben (nicht dargestellt).

Die Algorithmenstruktur wird beispielsweise so gewählt, daß die digitalisierten Bilder $S_1$ und $S_2$ (in Matrixform) für die Wellenlängenbereiche $\lambda_1$ und $\lambda_2$ durch folgende Beziehungen verknüpft werden:

$$S_R = A_o + b_1 S_1 (\lambda_1) + b_2 S_2 (\lambda_2)$$

mit $b_1 = b_2 = S_2 (\lambda_2)^{-1}$

$A_o$ = festzulegende Konstante.

Eine weitere Möglichkeit ein resultierendes Bildsignal $S_R$ zu ermitteln besteht darin, die Verknüpfung der Teilbildsignale $S_1 (\lambda_1)$, $S_2 (\lambda_2)$ mit Hilfe der an sich bekannten multiplen linearen Regression vorzunehmen.

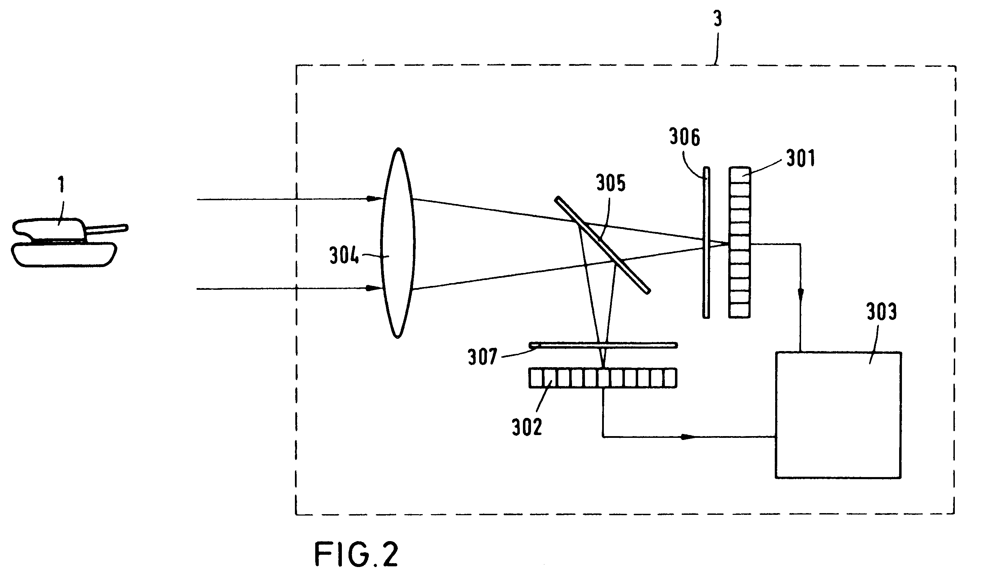

Fig. 2 gibt ein weiteres Ausführungsbeispiel der erfindungsgemäßen Vorrichtung wieder. Diese Vorrichtung ist mit 3 bezeichnet und besteht im wesentlichen wiederum aus den CCD-Arrays 301 und 302, die mit einer Signalverarbeitungseinrichtung mit Bildschirm 303 verbunden sind.

Im Gegensatz zur Fig. 1 enthält die Vorrichtung 3 lediglich eine Linse 304 sowie einen optischen Strahlteiler 305. Die Interferenzfilter 306 und 307 sind direkt vor den Arrays 301 und 302 angeordnet. Im vorliegenden Fall werden also die reflektierten Lichtstrahlen von dem Ziel 1 über die Linse 304, den Strahlenteiler 305 sowie die Interferenzfilter 306 und 307 auf die Arrays 301 und 302 gelenkt. Die Ausgangssignale der Arrays 301 und 302 gelangen dann zur Signalverarbeitungseinrichtung 303 und werden dort zu entsprechenden Bildsignalen verarbeitet und dargestellt.

Anstelle der direkten bildhaften Darstellung auf einem Monitor können die Bildsignale $S_R$ auch digital mittels eines weiteren Signalprozessors zur weiteren Zielklassifizierung der Zielverfolgung, beispielsweise bei autonomen Geschossen oder Lenkflugkörpern, verwendet werden.

## Patentansprüche

1. Vorrichtung (2;3) zur Gewinnung kontrastreicher Bilder von Gegenständen (1) mit Hilfe von Bildaufnahmeelementen, (wie Sensorzeilen, Sensorarrays, CCD- oder Restbildkameras) denen eine Signalverarbeitungseinrichtung (203-205; 303) nachgeschaltet ist, wobei die Vorrichtung (2;3) mindestens zwei Bildaufnahmeelemente (201,202; 301,302) enthält, deren Ausgangssignale der Signalverarbeitungsvorrichtung (203-205; 303) zugeführt werden und wobei gegenstandsseitig vor den Bildaufnahmeelementen (201,202; 301,302) optische Filter (209,210; 306,307) angeordnet sind, so daß jeder aus Bildaufnahmeelement (201,202; 301,302) und optischem Filter (209,210; 306,307) bestehende Lichtsensor seine maximale Empfindlichkeit in einem anderen Wellenlängenbereich ($\lambda1$, $\lambda2$) aufweist, wobei die Filter (209,210; 306,307) und/oder die Bildaufnahmeelemente (201,202; 301,302) derart gewählt sind, daß im ersten Wellenlängenbereich $\lambda1$ die Reflektionseigenschaften des Gegenstandes (1) und der den Gegenstand (1) umgebenden natürlichen Vegetation möglichst ähnlich sind und sich im zweiten Wellenlängenbereich $\lambda2$ ein möglichst großer Unterschied im Reflexionsverhalten von Gegenstand (1) und umgebende natürliche Vegetation ergibt, **dadurch gekennzeichnet**, daß die Signalverarbeitungsvorrichtung (203-205; 303) ein resultierendes Bildsignal $S_R$ erzeugt und auf einem Videodisplay (206) anzeigt, und derart ausgebildet ist, daß die digitalisierten und in Matritzenform vorliegenden Bilder $S_1$ und $S_2$ die jeweils den Wellenlängenbereichen $\lambda1$ und $\lambda2$ entsprechen durch folgende Beziehungen verknüpft werden:

$$S_R = A_o + b_1 S_1 (\lambda_1) + b_2 S_2 (\lambda_2)$$

mit

$b_1 = b_2 = S_2 (\lambda_2)^{-1}$

$A_o$ = festzulegende Konstante

**2.** Vorrichtung nach Anspruch 1, **dadurch gekennzeichnet**, daß für die beiden Wellenlängenbereiche gilt: $0,7\ \mu m \leqq \lambda_1 \leqq 2\ \mu m$ und $0,2\ \mu m \leqq \lambda_2 \leqq 0,6\ \mu m$.

**3.** Vorrichtung nach einem der Ansprüche 1 bis 2, **dadurch gekennzeichnet**, daß als Filter (209, 210; 306, 307) Interferenzfilter verwendet werden.

## Claims

**1.** Apparatus (2;3) for obtaining high-contrast images of objects (1) using image sensor elements (such as line sensors, sensor arrays, CCD or vestigial image cameras) which are followed by a signal processing means (203-205; 303), the apparatus (2;3) containing at least two image sensor elements (201,202; 301,302) of which the output signals are conveyed to the signal processing device (203-205; 303), optical filters (209,210;306,307) being positioned on the object side, in front of the image sensor elements (201,202; 301,302), so that every light detector consisting of an image sensor element (201,202; 301,302) and an optical filter (209,210; 306,307) has its maximum sensitivity in a different wave length range ($\lambda$1, $\lambda$2), the filters (209,210; 306,307) and/or the image sensor elements (201,202; 301,302) being selected to ensure that in the first wave length range $\lambda$1 the reflection properties of the object (1) and natural vegetation surrounding the object (1) are similar and that in the second wave length range $\lambda$2 the maximum possible difference is obtained between the reflection characteristic of the object (1) and that of the surrounding natural vegetation, characterised by the fact that the signal processing device (203-205; 303) generates a resultant image signal $S_R$ for display on a video unit (206) and is so constructed that the digitised images $S_1$ and $S_2$, present in matrix form and corresponding respectively to the wave length ranges $\lambda$1 and $\lambda$2 are interrelated by the following equations:

$$S_R = A_o + b_1 S_1(\lambda_1) + b_2 S_2(\lambda_2)$$

wherein

$$b_1 = b_2 = S_2(\lambda_2)^{-1},$$

$A_o$ being a constant to be determined.

**2.** Apparatus in accordance with Claim 1, characterised by the fact that for the two wave length ranges the following equations apply: $0.7\ \mu m \leqq \lambda_1 \leqq 2\ \mu m$ and $0.2\ \mu m \leqq \lambda_2 \leqq 0.6\ \mu m$.

**3.** Apparatus in accordance with either one of Claims 1 or 2, characterised by the fact that the filters used (209, 210; 306,307) consist of interference filters.

## Revendications

**1.** Dispositif (2 ; 3) pour l'obtention d'images très contrastées d'objets (1), à l'aide d'éléments de prise de vues (tels que des lignes de détecteurs, des ensembles de détecteurs, des caméras CCD ou des caméras d'images résiduelles) en aval desquels est monté un dispositif de traitement de signaux (203 à 205 ; 303), le dispositif (2 ; 3) comportant au moins deux éléments de prise de vues (201, 202 ; 301, 302) dont les signaux de sortie sont envoyés au dispositif de traitement de signaux (203, 205 ; 303) et des filtres optiques (209, 210 ; 306, 307) étant montés côté objet devant les éléments de prise de vues (201, 202 ; 301, 302), de sorte que chaque capteur photosensible constitué d'un élément de prise de vues (201, 202 ; 301, 302) et d'un filtre optique (209, 210 ; 306, 307), présente sa sensibilité maximale dans une autre gamme de longueurs d'ondes ($\lambda$1, $\lambda$2), les filtres (209, 210 ; 306, 307) et/ou les éléments de prise de vues (201, 202 ; 301, 302) étant choisis de manière que dans la première gamme de longueurs d'ondes ($\lambda$1) les propriétés de réflexion de l'objet (1) et de la végétation naturelle entourant l'objet (1) soient aussi semblables que possible et qu'ainsi dans la deuxième gamme de longueurs d'ondes ($\lambda$2) il résulte une différence aussi grande que possible dans le comportement à la réflexion de l'objet (1) et de la végétation naturelle environnante, caractérisé en ce que le dispositif de traitement de signaux (203 à 205 ; 303) produit un signal d'images résultantes ($S_R$) et l'affiche sur un écran vidéo (206) et est conçu de manière que les images ($S_1$) et ($S_2$) numérisées et se présentant sous forme de matrices qui correspondent chacune aux gammes de longueurs d'ondes ($\lambda$1) et ($\lambda$2), sont corrélées par les relations suivantes :

$$S_R = A_o + B_1 S_1(\lambda 1) + b_2 S_2(\lambda 2)$$

avec

$$b_1 = b_2 = S_2(\lambda 2)^{-1}$$

**4**

$A_o$ = constante à définir.

2. Dispositif selon la revendication 1, caractérisé en ce que pour les deux gammes de longueurs d'ondes on a : $0{,}7\ \mu m \leqq \lambda_1 \leqq 2\ \mu m$ et $0{,}2\ \mu m \leqq \lambda_2 \leqq 6\ \mu m$.

3. Dispositif selon l'une des revendications 1 à 2, caractérisé en ce qu'on utilise comme filtres (209, 210 ; 306, 307) des filtres à interférence.

FIG.1

EP 0 384 009 B1

FIG.2